(19) **Europäisches Patentamt European Patent Office Office européen des brevets**

(11) **EP 4 725 312 A1**

(12) **EUROPEAN PATENT APPLICATION**
published in accordance with Art. 153(4) EPC

(43) Date of publication:
**15.04.2026 Bulletin 2026/16**

(21) Application number: **23955231.8**

(22) Date of filing: **20.10.2023**

(51) International Patent Classification (IPC):
*A01N 55/02* (2006.01)          *A01N 37/44* (2006.01)
*A01P 17/00* (2006.01)

(86) International application number:
**PCT/CN2023/125689**

(87) International publication number:
**WO 2025/076857 (17.04.2025 Gazette 2025/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.10.2023   CN 202311318675**

(71) Applicant: **Ningbo Sunjoy Agroscience Co., Ltd.
Ningbo, Zhejiang 315200 (CN)**

(72) Inventors:
  • **HE, Dongsheng
   Ningbo, Zhejiang 315200 (CN)**

  • **ZHANG, Zhenye
   Ningbo, Zhejiang 315200 (CN)**
  • **CHEN, Junpeng
   Ningbo, Zhejiang 315200 (CN)**
  • **XU, Zongyu
   Ningbo, Zhejiang 315200 (CN)**
  • **YANG, Tingting
   Ningbo, Zhejiang 315200 (CN)**
  • **HE, Lanqing
   Ningbo, Zhejiang 315200 (CN)**
  • **YUAN, Jie
   Ningbo, Zhejiang 315200 (CN)**

(74) Representative: **Isern Patentes y Marcas S.L.
Avda. Diagonal, 463 Bis, 2°
08036 Barcelona (ES)**

(54) **USE OF AMINO ACID METAL COMPLEX IN PREPARATION OF BIRD REPELLENT**

(57)    Disclosed in the present invention is the use of an amino acid metal complex in the preparation of a bird repellent. The amino acid metal complex is one of a glycine metal complex, an asparaginic acid metal complex, a phenylalanine metal complex, a methionine metal complex, an arginine metal complex, a leucine metal complex, an isoleucine metal complex, a lysine metal complex, a glutamic acid metal complex, a threonine metal complex, a serine metal complex, a proline metal complex, a valine metal complex, a tryptophan metal complex, a tyrosine metal complex, a cysteine metal complex, an alanine metal complex, and a histidine metal complex. In the present invention, the bird repellent prepared by using an amino acid metal complex as an active ingredient is used in a seed dressing or spraying treatment for crop seeds or in a spraying treatment for crop fruits, and can repel more varieties of birds.

EP 4 725 312 A1

**Description**

<u>FIELD</u>

The present application relates to the technical field of chemical bird repellent technology, and more particularly, to a use of an amino acid metal complex for preparing a bird repellent.

<u>BACKGROUND</u>

The absorption, transport, and metabolism of amino acids by plants, as well as the application of amino acids in fertilizers and plant growth stimulants, have been reported both domestically and internationally. Existing studies have demonstrated that plants can directly absorb amino acid molecules from soil, and that the transport, distribution, and metabolism after absorption vary depending on the type of amino acid, resulting in different physiological effects. Amino acids are readily decomposed by sunlight or degraded by microorganisms in nature, and leaving no residual toxicity in soil or plants. Moreover, degradation products of the amino acids can further serve as nutrients for crops, thereby improving crop quality and yield. The application of such fertilizers is safe for humans and livestock, and presents no environmental pollution. Amino acid fertilizers have the effects of promoting plant growth and development, enhancing stress resistance, improving soil conditions, and increasing crop yield.

During studies on amino acids as plant stimulants to promote crop seed germination and growth, to resist biotic and abiotic stresses, and to induce fruit ripening and color change, the inventors discovered that the taste of amino acids is closely related to the size and hydrophobicity of the side chain groups of the amino acids. When the hydrophobicity of an amino acid side-chain group is relatively low, the amino acid mainly exhibits a sweet taste, such as glycine, aspartic acid, alanine, serine, and proline, and does not have an aversive or repellent effect on birds. When the hydrophobicity of an amino acid side-chain group is relatively high, for example phenylalanine, leucine, isoleucine, valine, tryptophan, arginine, histidine, and tyrosine, the amino acid can stimulate the taste buds of birds to produce a bitter taste, thereby preventing birds from feeding and achieving a bird-repellent effect. The inventors have applied for an invention patent in this regard (CN115316390A).

Further studies have demonstrated that complexes produced from amino acids and certain metals through coordination bonds not only exhibit better bird-repellent efficacy than the amino acids themselves, but also are capable of repelling a wider variety of bird species, including large birds such as *Gallus domesticus* and *Phasianus colchicus* for which amino acids alone exhibit poor repellent effects. Certain amino acids that do not have bird-repellent activity, such as glycine, aspartic acid, and alanine, can also effectively repel birds from feeding after forming metal complexes.

The prior art does not disclose any record of the use of amino acid metal complexes as bird repellents.

<u>SUMMARY</u>

In view of the deficiencies in the prior art, an objective of the present application is to provide a use of an amino acid metal complex for preparing a bird repellent, with the aim of solving the problem that existing bird repellents have potential hazards to the biological environment.

The technical solution adopted by the present application to solve the above-mentioned technical problems is as follows.

A use of an amino acid metal complex for preparing a bird repellent, the amino acid metal complex is selected from the group consisting of a glycine metal complex, an aspartic acid metal complex, a phenylalanine metal complex, a methionine metal complex, an arginine metal complex, a leucine metal complex, an isoleucine metal complex, a lysine metal complex, a glutamic acid metal complex, a threonine metal complex, a serine metal complex, a proline metal complex, a valine metal complex, a tryptophan metal complex, a tyrosine metal complex, a cysteine metal complex, an alanine metal complex, and a histidine metal complex.

Optionally, in the use of the amino acid metal complex for preparing a bird repellent, a metal in the amino acid metal complex is selected from the group consisting of zinc, manganese, magnesium, iron, copper, and calcium.

Optionally, in the use of the amino acid metal complex for preparing a bird repellent, the birds include *Passer domesticus, Lonchura striata, Pica pica, Spilopelia chinensis, Gallus domesticus,* and *Phasianus colchicus.*

A use of a pharmaceutical formulation for preparing a bird repellent, where the pharmaceutical formulation includes the amino acid metal complex as described above.

Optionally, in the use of the pharmaceutical formulation for preparing a bird repellent, the pharmaceutical formulation includes a dosage form selected from the group consisting of a suspension concentrate, a suspoemulsion, an oil-in-water emulsion, a oil-in-water emulsion, a microemulsion, a capsule suspension, an oil dispersion, an emulsifiable concentrate, a soluble concentrate, a soluble granule, a soluble powder, a water-dispersible granule, a wettable powder, a dustable powder, a flowable concentrate for seed treatment, an emulsion for seed treatment, a liquid for seed treatment, a water-dispersible powder for seed treatment, and a dry powder for seed treatment.

Optionally, in the use of the pharmaceutical formulation for preparing a bird repellent, the amino acid metal complex is present in an amount ranging from 1% to 90% by weight, based on a total weight of the pharmaceutical formulation.

Optionally, in the use of the pharmaceutical formulation for preparing a bird repellent, the amino acid metal complex is present in an amount ranging from 10% to 50% by weight, based on the total weight of the pharmaceutical formulation.

Optionally, in the pharmaceutical formulation, where the amino acid includes one or more selected from the group consisting of glycine, aspartic acid, phenylalanine, methionine, arginine, leucine, isoleucine, lysine, glutamic acid, and alanine.

Beneficial effects: Compared with the prior art, a bird repellent prepared by using an amino acid metal complex as an active ingredient in the present application can repel a wider variety of bird species, when used for seed dressing or spray treatment of crop seeds, or for spray treatment of crop fruits, and enables amino acids that originally do not have bird-repellent functions to effectively repel birds after forming metal complexes. Use according to the recommended dosage can effectively reduce feeding and damage by birds to crop seeds and fruits, without causing harm to birds. In addition, the bird repellent prepared by using the amino acid metal complex as the active ingredient is safe for humans and livestock, convenient to use, and low in cost, and can further promote the growth and development of crop seeds, seedlings, and fruits, thereby achieving increased agricultural production and increased income for farmers.

## DETAILED DESCRIPTION OF EMBODIMENTS

The present application is further described in detail below with reference to specific embodiments. However, the implementations of the present application are not limited to the embodiments. For process parameters not specifically indicated, reference may be made to conventional techniques.

Unless otherwise specified, the technical and scientific terms used herein have the same meanings as those commonly understood by those skilled in the art to which the present application pertains. Units for expressing raw material contents are all based on parts by weight. Other unspecified raw materials and reagents in the present application refer to those commonly used in the art.

In order to solve the problems that existing bird repellents have unstable bird-repellent effects, require large application dosages, have high costs, are unsafe for humans and livestock, and are not environmentally friendly, the present application provides the following technical solution.

Studies conducted by the inventors demonstrated that complexes produced from amino acids and certain metals through coordination bonds not only exhibit better bird-repellent efficacy than the amino acids themselves, but also are capable of repelling a wider variety of bird species, including large birds such as *Gallus domesticus* and *Phasianus colchicus* for which amino acids alone exhibit poor repellent effects. Certain amino acids that have almost no bird-repellent activity, such as glycine, aspartic acid, and alanine, can also effectively repel birds from feeding after forming metal complexes.

An amino acid metal complex that is commonly used in the prior art as a nutrient for humans, animals, and plants is adopted as a bird repellent. The amino acids include, but are not limited to, glycine, aspartic acid, phenylalanine, methionine, arginine, leucine, isoleucine, lysine, glutamic acid, threonine, serine, proline, valine, tryptophan, tyrosine, cysteine, alanine, and histidine. And the metals include, but are not limited to, zinc, manganese, magnesium, iron, copper, and calcium. It should be noted that, in the present application, during complexation of amino acids with metals, two different amino acids may complex with one metal, or one amino acid may complex with two or more metals.

Based on the same inventive concept, the present application further provides a pharmaceutical formulation, in which an active ingredient is the amino acid metal complex. It is readily understood that the amino acid metal complex includes, but is not limited to, complexes formed through coordination bonds between amino acids such as glycine, aspartic acid, phenylalanine, methionine, arginine, leucine, isoleucine, lysine, glutamic acid, threonine, serine, proline, valine, tryptophan, tyrosine, cysteine, alanine, and histidine, and metals such as zinc, manganese, magnesium, iron, copper, and calcium.

Various dosage forms may be prepared according to use requirements. The dosage forms include, but are not limited to, suspension concentrate (SC), suspoemulsion (SE), oil-in-water emulsion (EW), microemulsion (ME), capsule suspension (CS), oil dispersion (OD), emulsifiable concentrate (EC), soluble concentrate (SL), soluble granule (SG), soluble powder (SP), water-dispersible granule (WG), wettable powder (WP), dustable powder (DP), granule (GR), flowable concentrate for seed treatment (FS), emulsion for seed treatment (ES), liquid for seed treatment (LS), water-dispersible powder for seed treatment (WS), and dry powder for seed treatment (DS). By preparing the formulation into different dosage forms, suitability for various application environments is achieved and diverse application requirements are satisfied.

In the present embodiment, the amino acid metal complex may account for 1% to 10%, 10% to 20%, 20% to 30%, 30% to 40%, 40% to 50%, 50% to 60%, 60% to 70%, 70% to 80%, or 80% to 90% by weight of the pharmaceutical formulation. For example, the amino acid metal complex accounts for 10% to 50% by weight of the pharmaceutical formulation. Controlling the content of the amino acid metal complex within the range of 10% to 50% can achieve a relatively good bird-repellent effect while reducing the dosage of said complex, thereby reducing the cost of the formulation.

The above technical solution provided by the present application is further explained and illustrated below by listing embodiments.

Formulation Embodiment 1 (Suspension Concentrate, SC)

In a shearing kettle, 5.00% tristyrylphenol polyoxyethylene ether phosphate, 3.00% sodium naphthalenesulfonate-formaldehyde condensate, 3.00% octylphenol polyoxyethylene ether, 0.30% xanthan gum, 0.30% polysiloxane, 20.00% propylene glycol, and 0.30% 1,2-benzisothiazolin-3-one were sequentially drawn in under vacuum. Water was added to make up to 100%, and then a vent valve of the shearing kettle was opened. A manhole cover of the shearing kettle was opened. After the shearing machine was turned on and ran for 10 minutes, a required amino acid metal complex (phenylalaninate zinc complex) was fed into the shearing kettle. The shearing machine was shut down after shearing for a set period. A bottom valve of the shearing kettle was opened, a cooling water valve of a sand mill was switched on to maintain a continuous cooling water flow, and the sand mill was started to run two passes of sand milling. A milled material was transferred to a post-shearing kettle for further shearing. After sampling and analysis verified compliance, the material was discharged and filtered to obtain an amino acid metal complex suspension concentrate.

Formulation Embodiment 2 (Seed Treatment Suspension, FS)

In the shearing kettle, 0.50% tristyrylphenol polyoxyethylene ether phosphate, 0.50% polyoxyethylene-polyoxypropylene monobutyl ether, 0.50% sodium naphthalenesulfonate-formaldehyde condensate, 0.10% polysiloxane, 0.05% xanthan gum, 3.00% propylene glycol, 0.50% Pigment Red, 0.10% polyvinylpyrrolidone, and 0.10% 1,2-benzisothiazolin-3-one were sequentially drawn in under vacuum. Water was added to make up to 100%, and then the vent valve of the shearing kettle was opened. The manhole cover of the shearing kettle was opened. After the shearing machine was turned on and ran for 10 minutes, the required amino acid metal complex (manganese glycinate complex) was fed into the shearing kettle. The shearing machine was shut down after shearing for a set period. The bottom valve of the shearing kettle was opened, the cooling water valve of the sand mill was switched on to maintain a continuous cooling water flow, and the sand mill was started to run two passes of sand milling. The milled material was transferred to a post-shearing kettle for further shearing. After sampling and analysis verified compliance, the material was discharged and filtered to obtain an amino acid metal complex seed treatment suspension.

Formulation Embodiment 3 (Wettable Powder, WP)

Into a stirring kettle, the required amino acid metal complex (calcium isoleucinate complex), 8.00% sodium lignosulfonate, 2.00% sodium dodecyl sulfate, and 7.00% sodium methylenedinaphthalenesulfonate were sequentially fed. Kaolin was added to make up to 100%, and then a stirrer was turned on. Stirring was conducted for 1.5 hours until the mixture was completely uniform. A jet mill was started for pulverization, and a pulverized material was stirred and mixed for another 1.5 hours. After sampling and analysis verified compliance, an amino acid metal complex wettable powder was obtained.

Formulation Embodiment 4 (Water-Dispersible Granule, WG)

Into the stirring kettle, the required amino acid metal complex (copper alaninate complex), 10.00% sodium lignosulfonate, 15.00% alkylnaphthalene sulfonate-formaldehyde condensate, 3.00% sodium ester sulfonate, and 50.00% sodium sulfate were sequentially fed. Kaolin was added to make up to 100%, and then the stirrer was turned on. Stirring was conducted for 1 hour until the mixture was completely uniform. A jet mill was started for pulverization, and the pulverized material was stirred and mixed for another 1.5 hours. After sampling and analysis verified compliance, the material was discharged and transferred to a fluidized bed granulator to start granulation. During the granulation process, the particle uniformity was observed. When the particles became uniformly formed, sampling and testing were performed, and an amino acid metal complex water-dispersible granule was obtained upon verification of compliance.

Bioassay Embodiment:

The following embodiments, the inventors evaluated the feeding deterrence rate of the bird repellent containing amino acid metal complexes as the active ingredient, by means of *Spilopelia chinensis* (as a substitute for magpies), *Lonchura striata* (as a substitute for *Passer domesticus*), *Gallus domesticus* and *Phasianus colchicus* in artificial greenhouses.

Feeding deterrence rate = (feeding rate of birds on blank control crops - feeding rate of birds on treated crops) / feeding rate of birds on blank control crops $\times$ 100%.

Bioassay Embodiment 1

A 10% amino acid metal complex suspension was used at different dosages to carry out seed dressing treatment on rice seeds, and the feeding deterrence rate was calculated based on the weight of rice seeds consumed by birds.

Table 1. Feeding Deterrence Rate of 10% Amino Acid Metal Complex SC

| Evaluate bird species / Sample name | Lonchura striata | Spilopelia chinensis | Gallus domesticus | Phasianus colchicus |
|---|---|---|---|---|
| 10% Arginine zinc complex SC 20g/kg rice seeds | 97.27% | 90.18% | 84.57% | 84.66% |
| 10% Phenylalanine zinc complex SC 20g/kg rice seeds | 96.61% | 94.93% | 83.67% | 86.50% |
| 10% Methionine zinc complex SC 20g/kg rice seeds | 96.23% | 91.60% | 87.78% | 84.22% |
| 10% Glutamic acid magnesium complex SC 20g/kg rice seeds | 96.41% | 82.00% | 85.02% | 81.38% |
| 10% Arginine zinc complex SC 40g/kg rice seeds | 99.90% | 97.76% | 95.20% | 99.49% |
| 10% Phenylalanine zinc complex SC 40g/kg rice seeds | 100.00% | 98.55% | 92.97% | 95.52% |
| 10% Methionine zinc complex SC 40g/kg rice seeds | 100.00% | 100.00% | 94.71% | 94.36% |
| 10% Glutamic acid magnesium complex SC 40g/kg rice seeds | 99.43% | 97.26% | 90.63% | 92.14% |
| 10% Arginine SC 40g/kg rice seeds | 98.44% | 97.11% | 74.37% | 68.42% |
| 10% Phenylalanine SC 40g/kg rice seeds | 99.25% | 94.38% | 76.09% | 67.36% |
| 10% Methionine SC | 94.52% | 93.19% | 67.45% | 69.20% |

| 40g/kg rice seeds | | | | |
|---|---|---|---|---|
| 10% Glutamic acid SC<br><br>40g/kg rice seeds | 54.06% | 39.74% | 28.10% | 25.89% |

Bioassay Embodiment 2

A 40% amino acid metal complex seed treatment suspension was used at different dosages to carry out seed dressing treatment on rice seeds, and the feeding deterrence rate was calculated based on the weight of rice seeds consumed by birds.

Table 2. Feeding Deterrence Rate of 40% Amino Acid Metal Complex FS

| Evaluate bird species / Sample name | *Lonchura striata* | *Spilopelia chinensis* | *Gallus domesticus* | *Phasianus colchicus* |
|---|---|---|---|---|
| 40% Glycine zinc complex FS<br><br>5 g/kg rice seeds | 98.70% | 91.93% | 81.66% | 89.11% |
| 40% Glycine manganese complex FS<br><br>5 g/kg rice seeds | 91.29% | 88.07% | 82.73% | 87.54% |
| 40% Aspartic acid zinc complex FS<br><br>5 g/kg rice seeds | 99.35% | 93.82% | 85.44% | 83.06% |
| 40% Aspartic acid manganese complex FS<br><br>5 g/kg rice seeds | 99.17% | 95.01% | 84.87% | 90.25% |
| 40% Aspartic acid magnesium complex FS<br><br>5 g/kg rice seeds | 96.40% | 87.17% | 80.29% | 83.92% |
| 40% Glycine zinc complex FS<br><br>10 g/kg rice seeds | 100.00% | 95.11% | 93.24% | 99.03% |
| 40% Glycine manganese complex FS<br><br>10 g/kg rice seeds | 99.86% | 97.40% | 97.32% | 95.22% |
| 40% Aspartic acid zinc complex FS<br><br>10 g/kg rice seeds | 100.00% | 98.92% | 96.42% | 96.68% |

| | | | | |
|---|---|---|---|---|
| 40% Aspartic acid manganese complex FS 10 g/kg rice seeds | 100.00% | 100.00% | 97.03% | 94.60% |
| 40% Aspartic acid magnesium complex FS 10 g/kg rice seeds | 100.00% | 97.95% | 93.81% | 92.49% |
| 40% Glycine FS 10 g/kg rice seeds | -27.90% | -34.16% | -39.17% | -0.24% |
| 40% Aspartic acid FS 10 g/kg rice seeds | 18.00% | 13.29% | -20.66% | -6.32% |

Bioassay Embodiment 3

A 25% amino acid metal complex wettable powder was appropriately diluted with water and used at different dosages to carry out seed dressing treatment on rice seeds, and the feeding deterrence rate was calculated based on the weight of rice seeds consumed by birds.

Table 3. Feeding Deterrence Rate of 25% Amino Acid Metal Complex WP

| Evaluate bird species  Sample name | *Lonchura striata* | *Spilopelia chinensis* | *Gallus domesticus* | *Phasianus colchicus* |
|---|---|---|---|---|
| 25% Leucine calcium complex WP 8 g/kg rice seeds | 96.42% | 83.47% | 82.58% | 85.30% |
| 25% Isoleucine calcium complex WP 8 g/kg rice seeds | 98.51% | 94.95% | 81.50% | 81.86% |
| 25% Leucine calcium complex WP 16 g/kg rice seeds | 99.18% | 96.45% | 91.14% | 94.81% |
| 25% Isoleucine calcium complex WP 16 g/kg rice seeds | 100.00% | 98.00% | 93.19% | 92.33% |
| 25% Leucine WP 16 g/kg rice seeds | 80.04% | 69.30% | 45.34% | 39.08% |

**EP 4 725 312 A1**

| 25% Isoleucine WP 16 g/kg rice seeds | 100.00% | 94.93% | 68.22% | 63.75% |
|---|---|---|---|---|

Bioassay Embodiment 4

A 50% amino acid metal complex water-dispersible granule was appropriately diluted with water and used at different dosages to carry out seed dressing treatment on rice seeds, and the feeding deterrence rate was calculated based on the weight of rice seeds consumed by birds.

Table 4. Feeding Deterrence Rate of 50% Amino Acid Metal Complex WG

| Evaluate bird species / Sample name | *Lonchura striata* | *Spilopelia chinensis* | *Gallus domesticus* | *Phasianus colchicus* |
|---|---|---|---|---|
| 50% Lysine iron complex WG 4 g/kg rice seeds | 93.71% | 88.62% | 80.56% | 83.90% |
| 50% Lysine copper complex WG 4 g/kg rice seeds | 92.39% | 82.99% | 83.05% | 81.78% |
| 50% Alanine copper complex WG 4 g/kg rice seeds | 90.65% | 88.68% | 85.39% | 86.24% |
| 50% Alanine zinc complex WG 4 g/kg rice seeds | 92.03% | 90.01% | 86.22% | 82.45% |
| 50% Lysine iron complex WG 8 g/kg rice seeds | 99.94% | 98.11% | 91.25% | 93.00% |
| 50% Lysine copper complex WG 8 g/kg rice seeds | 99.89% | 97.83% | 93.31% | 93.82% |
| 50% Alanine copper complex WG 8 g/kg rice seeds | 99.84% | 98.49% | 94.77% | 96.08% |
| 50% Alanine zinc complex WG 8 g/kg rice seeds | 99.77% | 98.39% | 94.12% | 95.36% |
| 50% Lysine WG 8 g/kg rice seeds | 42.72% | 35.66% | 29.41% | 26.05% |

9

| | | | | |
|---|---|---|---|---|
| 50% Alanine WG  8 g/kg rice seeds | 0.31% | -15.40% | -32.59 | -11.28% |

The data from the above bioassay embodiments shows that when the amino acid metal complex is used as the active ingredient at 2 g/kg of seeds for seed dressing, the feeding deterrence rate for *Lonchura striata, Spilopelia chinensis, Gallus domesticus,* and *Phasianus colchicus* is over 80%, thereby providing effective bird-repellent protection for crop seeds. When the active ingredient of the amino acid metal complex is increased to 4 g/kg of seeds for seed dressing, the feeding deterrence rate *for Lonchura striata, Spilopelia chinensis, Gallus domesticus, and Phasianus colchicus* reaches over 90%. At the same dosage of active ingredient, the amino acid metal complex exhibits a significantly higher feeding deterrence rate for birds, especially for large birds such as *Gallus domesticus* and *Phasianus colchicus,* compared with the corresponding amino acids.

In summary, the present application provides a use of an amino acid metal complex for preparing a bird repellent, in which the amino acid is one or more selected from the group consisting of glycine, aspartic acid, phenylalanine, methionine, arginine, leucine, isoleucine, lysine, glutamic acid, threonine, serine, proline, valine, tryptophan, tyrosine, cysteine, alanine, and histidine. And the metal is one or more selected from the group consisting of zinc, manganese, magnesium, iron, copper, and calcium.

The bird repellent prepared using the amino acid metal complex as an active ingredient for seed dressing of crop seeds can effectively reduce bird feeding on crop seeds and provides obvious protective effects. The bird repellent with the amino acid metal complex as the active ingredient exhibits feeding deterrence against common birds even at a very low active ingredient dosage of 2 g/kg of seeds. When used at the recommended dosage, it causes no harm to birds, is safe for humans and livestock, and features convenient application as well as low cost. In addition, it can promote the growth and development of crop seeds, seedlings, and fruits, thereby achieving increased agricultural production and increased income for farmers.

The above content describes the basic principles, main features, and performance advantages of the present application. It should be understood that the performance and applications of the present application are not limited to the embodiments described above. Those skilled in the art can make modifications or variations based on the above description, and all such modifications and variations should fall within the scope of the claims of the present application.

**Claims**

1. Use of an amino acid metal complex for preparing a bird repellent, wherein the amino acid metal complex is selected from the group consisting of a glycine metal complex, an aspartic acid metal complex, a phenylalanine metal complex, a methionine metal complex, an arginine metal complex, a leucine metal complex, an isoleucine metal complex, a lysine metal complex, a glutamic acid metal complex, a threonine metal complex, a serine metal complex, a proline metal complex, a valine metal complex, a tryptophan metal complex, a tyrosine metal complex, a cysteine metal complex, an alanine metal complex, and a histidine metal complex.

2. The use of the amino acid metal complex for preparing a bird repellent according to claim 1, wherein a metal in the amino acid metal complex is selected from the group consisting of zinc, manganese, magnesium, iron, copper, and calcium.

3. The use of the amino acid metal complex for preparing a bird repellent according to claim 1, wherein the birds comprise *Passer domesticus, Lonchura striata, Pica pica, Spilopelia chinensis, Gallus domesticus,* and *Phasianus colchicus.*

4. Use of a pharmaceutical formulation for preparing a bird repellent, wherein the pharmaceutical formulation comprises the amino acid metal complex according to claim 1.

5. The use of the pharmaceutical formulation for preparing a bird repellent according to claim 4, wherein the pharmaceutical formulation comprises a dosage form selected from the group consisting of a suspension concentrate, a suspoemulsion, an oil-in-water emulsion, a oil-in-water emulsion, a microemulsion, a capsule suspension, an oil dispersion, an emulsifiable concentrate, a soluble concentrate, a soluble granule, a soluble powder, a water-dispersible granule, a wettable powder, a dustable powder, a flowable concentrate for seed treatment, an emulsion for seed treatment, a liquid for seed treatment, a water-dispersible powder for seed treatment, and a dry powder for seed treatment.

6. The use of the pharmaceutical formulation for preparing a bird repellent according to claim 4, wherein the amino acid metal complex is present in an amount ranging from 1% to 90% by weight, based on a total weight of the pharmaceutical formulation.

7. The use of the pharmaceutical formulation for preparing a bird repellent according to claim 4, wherein the amino acid metal complex is present in an amount ranging from 10% to 50% by weight, based on a total weight of the pharmaceutical formulation.

8. The pharmaceutical formulation according to claim 4, wherein the amino acid comprises one or more selected from the group consisting of glycine, aspartic acid, phenylalanine, methionine, arginine, leucine, isoleucine, lysine, glutamic acid, and alanine.

## INTERNATIONAL SEARCH REPORT

| International application No. |
|---|
| **PCT/CN2023/125689** |

**A.    CLASSIFICATION OF SUBJECT MATTER**

A01N 55/02(2006.01)i;  A01N 37/44(2006.01)i;  A01P 17/00(2006.01)i

According to International Patent Classification (IPC) or to both national classification and IPC

**B.    FIELDS SEARCHED**

Minimum documentation searched (classification system followed by classification symbols)

IPC:A01N,A01P

Documentation searched other than minimum documentation to the extent that such documents are included in the fields searched

Electronic data base consulted during the international search (name of data base and, where practicable, search terms used)

CJFD, CNTXT, DWPI, ENTXTC, STN: 氨基酸, 氨酸, 驱鸟, bird, birds, repellent, amino acid

**C.    DOCUMENTS CONSIDERED TO BE RELEVANT**

| Category* | Citation of document, with indication, where appropriate, of the relevant passages | Relevant to claim No. |
|---|---|---|
| X | CN 115316390 A (NINGBO SUNJOY AGROSCIENCE CO., LTD.) 11 November 2022 (2022-11-11)<br>     description, paragraphs [0009]-[0065], and claims 1-10 | 1-8 |
| A | JP 2015043726 A (N-TECH KK et al.) 12 March 2015 (2015-03-12)<br>     entire document | 1-8 |
| A | JP H04202103 A (IMAIZUMI SUZURAN) 22 July 1992 (1992-07-22)<br>     entire document | 1-8 |
| A | EP 4088579 A1 (SEEDFORWARD GMBH) 16 November 2022 (2022-11-16)<br>     entire document | 1-8 |
| A | JP 2000191416 A (HOKKO CHEMICAL INDUSTRY CO., LTD.) 11 July 2000 (2000-07-11)<br>     entire document | 1-8 |

☐ Further documents are listed in the continuation of Box C.       ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 March 2024** | **22 March 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/125689**

| Patent document cited in search report | | | Publication date (day/month/year) | Patent family member(s) | | | Publication date (day/month/year) |
|---|---|---|---|---|---|---|---|
| CN | 115316390 | A | 11 November 2022 | None | | | |
| JP | 2015043726 | A | 12 March 2015 | None | | | |
| JP | H04202103 | A | 22 July 1992 | None | | | |
| EP | 4088579 | A1 | 16 November 2022 | EP | 4088578 | A1 | 16 November 2022 |
| JP | 2000191416 | A | 11 July 2000 | JP | 4526622 | B2 | 18 August 2010 |

Form PCT/ISA/210 (patent family annex) (July 2022)

**REFERENCES CITED IN THE DESCRIPTION**

**Patent documents cited in the description**

- CN 115316390 A